(19) Europäisches Patentamt / European Patent Office / Office européen des brevets

(11) **EP 4 015 808 B1**

(12) **FASCICULE DE BREVET EUROPEEN**

(45) Date de publication et mention de la délivrance du brevet:
**28.08.2024 Bulletin 2024/35**

(21) Numéro de dépôt: **21213233.6**

(22) Date de dépôt: **08.12.2021**

(51) Classification Internationale des Brevets (IPC):
**F02D 41/18** $^{(2006.01)}$    **F02D 41/14** $^{(2006.01)}$
**F02D 41/00** $^{(2006.01)}$

(52) Classification Coopérative des Brevets (CPC):
**F02D 41/18; F02D 41/0002; F02D 41/003;**
**F02D 41/0052; F02D 41/1401;** F02D 41/0007;
F02D 2041/001; F02D 2200/0406;
F02D 2200/0411; F02D 2200/101; Y02T 10/40

(54) **SYSTÈME ET PROCÉDÉ DE COMMANDE D'UN MOTEUR À COMBUSTION INTERNE BASÉE SUR LE RENDEMENT DE REMPLISSAGE**

STEUERSYSTEM UND VERFAHREN ZUR STEUERUNG EINES VERBRENNUNGSMOTORS, DAS AUF DEM WIRKUNGSGRAD DER BEFÜLLUNG BASIERT

SYSTEM AND METHOD FOR CONTROLLING AN INTERNAL COMBUSTION ENGINE BASED ON FILLING PERFORMANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 FR 2013490**

(43) Date de publication de la demande:
**22.06.2022 Bulletin 2022/25**

(73) Titulaire: **NEW H POWERTRAIN HOLDING, S.L.U.**
**47008 Valladolid (ES)**

(72) Inventeurs:
• **NERRIERE, Aurelien**
  **91580 ETRECY (FR)**
• **Pereira, Luc**
  **18320 Cours Des Barres (FR)**
• **DAMANCE, Hugo**
  **91700 SAINTE GENEVIEVE DES BOIS (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
**EP-A1- 2 474 728      EP-A1- 3 020 940**
**US-A- 5 465 617      US-A1- 2014 067 287**

**Description**

*Domaine technique*

L'invention a pour domaine technique la commande des moteurs à combustion interne, notamment de tels moteurs munis de distribution variable. Un tel moteur est par exemple connu de US 2014/067287 A1.

*Etat de la technique*

Usuellement, pour les moteurs à combustion interne du type à allumage commandé (fonctionnant notamment à l'essence) qui sont pourvus d'un circuit de recirculation partielle des gaz d'échappement à l'admission (circuit « EGR », de l'acronyme en langue anglaise pour : Exhaust Gas Recirculation »), la consigne de couple issue de la volonté du conducteur (enfoncement de la pédale d'accélérateur) est traduite d'une part en une consigne de débit d'air frais (pour brûler le carburant et produire le couple), et d'autre part en une consigne de débit EGR (pour obtenir un taux d'EGR permettant de produire ce couple avec un certain rendement, une certaine avance à l'allumage...).
La consigne de débit d'air frais permet de déterminer la quantité d'air pour brûler le carburant admis en général dans les proportions stoechiométriques, c'est-à-dire à richesse 1, et produire le couple requis.
La consigne de débit EGR permet d'obtenir un taux d'EGR afin de produire ce couple avec un certain rendement, une certaine avance à l'allumage.
La somme des deux consignes définit une consigne de débit moteur $Q_{engine,sp}$.
Cette consigne de débit moteur est traduite en une consigne de pression collecteur $P_{col,sp}$ en utilisant un modèle de rendement de remplissage, qui correspond à l'équation suivante.

$$P_{col,sp} = Q_{engine,sp} * \frac{120.r.T_{col}}{(\eta_{vol,cal}).N.V_{cyl}} \qquad \text{(Eq. 1)}$$

Avec :

$T_{col}$ : la température dans le collecteur d'admission
$V_{cyl}$ : le volume des cylindres ou cylindrée
$\eta_{vol,cal}$ : le rendement de remplissage calibré

Le rendement de remplissage calibré $\eta_{vol,cal}$ est déterminé par l'intermédiaire d'essais et est mémorisée dans une cartographie, éventuellement corrigée pour tenir compte de la température ou de la pression de l'air ambient (par l'intermédiaire de l'altitude).
Le moteur est ensuite commandé via des actionneurs jusqu'à un boitier-papillon afin d'obtenir une valeur mesurée $P_{col,mes}$ de la pression collecteur égale à cette consigne de pression $P_{col,sp}$. De même, on commande la vanne de débit EGR pour obtenir un débit d'EGR égal à la consigne de débit EGR, le débit étant obtenu par l'équation de Barré Sant Venant.
En inversant le modèle de remplissage volumétrique, on peut en déduire le débit moteur total estimé $Q_{engine,est}$.

$$Q_{engine,est} = \frac{N}{120} * \eta_{vol,cal} * V_{cyl} * \frac{P_{col}}{r.T_{col}} \qquad \text{(Eq. 2)}$$

Avec :
$P_{col}$ : la pression dans le collecteur d'admission
En parallèle, on dispose d'une estimation du débit de gaz EGR par le modèle de Barré Saint Venant $Q_{egr,est}$ et d'une estimation du débit massique d'air par le débitmètre $Q_{AFS}$.
On peut ensuite construire une valeur de débit d'air observé $Q_{air,obs}$ comme la différence entre le débit moteur $Q_{engine,est}$ (modèle de remplissage) et le débit EGR $Q_{egr,est}$.
En parallèle, on peut construire une valeur de débit total observé $Q_{tot,obs}$ comme la somme du débit d'air mesuré $Q_{AFS}$ et du débit EGR $Q_{egr,est}$.
Une telle commande présente :

- une cohérence entre la mesure de la pression dans le collecteur d'admission et la consigne de pression correspondante

- une cohérence entre la consigne de débit total et la valeur de débit total calculée par le modèle de remplissage.

Néanmoins, à cause d'erreurs et de dérives sur les capteurs de mesure de pression collecteur, de la pression différentielle, de la température et du modèle de remplissage :
Un tel contrôle ne présente pas :

- de cohérence entre la consigne de débit total et la valeur correspondante issue de l'observeur $Q_{tot,obs}$
- de cohérence entre la consigne de débit d'air et la valeur correspondante issue de l'observeur $Q_{air,obs}$.

La réalisation du débit total est commandée notamment par l'intermédiaire du boitier papillon grâce auquel on commande la pression dans le collecteur d'admission. Quand le moteur est du type suralimenté, un turbocompresseur du moteur peut également contribuer à ajuster le débit en modifiant la densité du mélange gazeux admis dans les cylindres du moteur.

Comme présenté plus haut, la consigne de pression dans le collecteur $P_{col,sp}$ est déterminée sur la base du modèle de remplissage afin d'atteindre la consigne de débit total.

De plus, l'obtention du débit d'air est prioritaire sur l'obtention du taux d'EGR. Quand le débit total ne permet pas d'obtenir à la fois un débit d'air et un débit d'EGR, le débit d'air est réalisé en premier.

Un tel comportement de la commande, et l'incohérence qu'elle peut générer pose des problèmes :

- au niveau de la surveillance du couple réalisé, par l'intermédiaire des diagnostics embarqués, car le couple demandé peut ne pas être considéré comme réalisé,
- au niveau de la quantité de gaz d'échappement recirculés réellement obtenue, et
- au niveau de l'agrément de conduite, car la consigne de couple requise par le conducteur ne sera pas bien réalisée.

Le problème technique à résoudre est de savoir comment obtenir la cohérence entre les différentes sources d'estimation, et comment minimiser les erreurs d'estimation des différents débits, en combinant lesdites différentes sources d'estimation.

### Exposé de l'invention

L'invention a pour objet un système de commande d'un moteur à combustion interne à allumage commandé, muni d'un circuit de recirculation partielle des gaz d'échappement muni d'une vanne de débit EGR, de capteurs de pression et de température dans le collecteur d'admission, d'un débitmètre dans la conduite d'admission d'air frais, et d'une vanne d'admission à l'entrée du collecteur d'admission. Le système de commande comprend :

un moyen de calcul d'une estimation de la masse admise dans le moteur en fonction du volume des cylindres, de la pression et de la température dans le collecteur d'admission et d'une valeur calibrée du rendement de remplissage issue d'une cartographie,
un troisième moyen de calcul de la valeur observée de la masse totale admise dans les cylindres en fonction de la masse admise dans le moteur, de la quantité d'air admis mesurée, de la quantité de gaz d'échappement partiellement recirculés et de la masse de purge canister par application d'un observeur un moyen de calcul de la valeur observée du rendement de remplissage en fonction de la valeur observée de la masse totale admise dans les cylindres, du volume des cylindres, de la température et de la pression dans le collecteur d'admission,
des moyens de calcul d'une consigne de pression dans le collecteur d'admission en fonction de la valeur observée et de la valeur calibrée du rendement de remplissage, et
des moyens de commande du moteur en boucle fermée en fonction de la consigne de pression dans le collecteur d'admission et de la mesure de la pression dans le collecteur d'admission.

Le système de commande peut comprendre un moyen de calcul d'une valeur calibrée du rendement de remplissage en fonction de la vitesse de rotation du moteur, de la mesure de pression dans le collecteur d'admission et d'une cartographie mémorisée.

Le moteur à combustion interne peut être muni d'une distribution variable à l'admission, le moyen de calcul étant alors configuré pour déterminer le rendement de remplissage en fonction de la vitesse de rotation du moteur, de la mesure de pression dans le collecteur d'admission, des données de levée des soupapes de la distribution variable et d'une cartographie mémorisée.

Le système de commande comprend un moyen de calcul de la valeur finale du rendement de remplissage comme la moyenne pondérée entre le rendement de remplissage observé et une valeur calibrée du rendement de remplissage, la pondération évoluant avec le temps au cours d'un régime transitoire jusqu'à une valeur finale du rendement de remplissage égale au rendement de remplissage observé.

Le système de commande comprend un moyen de calcul de la valeur finale du rendement de remplissage comme étant égal au rendement de remplissage observé.

Le troisième moyen de calcul détermine la valeur observée de la masse totale admise comme une moyenne pondérée de la fonction de la masse admise, et de la quantité d'air admis mesurée, sommée à la quantité de gaz d'échappement partiellement recirculés et de la masse de purge canister.

L'invention a également pour objet un procédé hors du champ des revendications de commande d'un moteur à combustion interne à allumage commandé muni d'un circuit de recirculation partielle des gaz d'échappement muni d'une vanne de débit EGR, de capteurs de pression et de température dans le collecteur d'admission, d'un débitmètre dans la conduite d'admission d'air frais, et d'une vanne d'admission à l'entrée du collecteur d'admission. Le procédé comprend alors les étapes suivantes :

on détermine une estimation de la masse admise en fonction du volume des cylindres, de la pression et de la température dans le collecteur d'admission et d'une valeur calibrée du rendement de remplissage issue d'une cartographie,
on détermine une valeur observée de la masse totale admise en fonction de la masse admise, de la quantité d'air admis mesurée, de la quantité de gaz d'échappement partiellement recirculés et de la masse de purge canister par application d'un observeur
on détermine une valeur observée du rendement de remplissage en fonction de la valeur observée de la masse totale admise, du volume des cylindres, de la température et de la pression dans le collecteur d'admission,
on détermine une consigne de pression dans le collecteur d'admission en fonction de la valeur observée et de la valeur calibrée du rendement de remplissage, et
on commande le moteur en boucle fermée en fonction de la consigne de pression dans le collecteur d'admission et de la mesure de la pression dans le collecteur d'admission.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :

- [Fig 1] illustre un moteur à combustion interne, et
- [Fig 2] illustre les principaux éléments d'un système de commande d'un moteur à combustion interne selon l'invention.

### Description détaillée

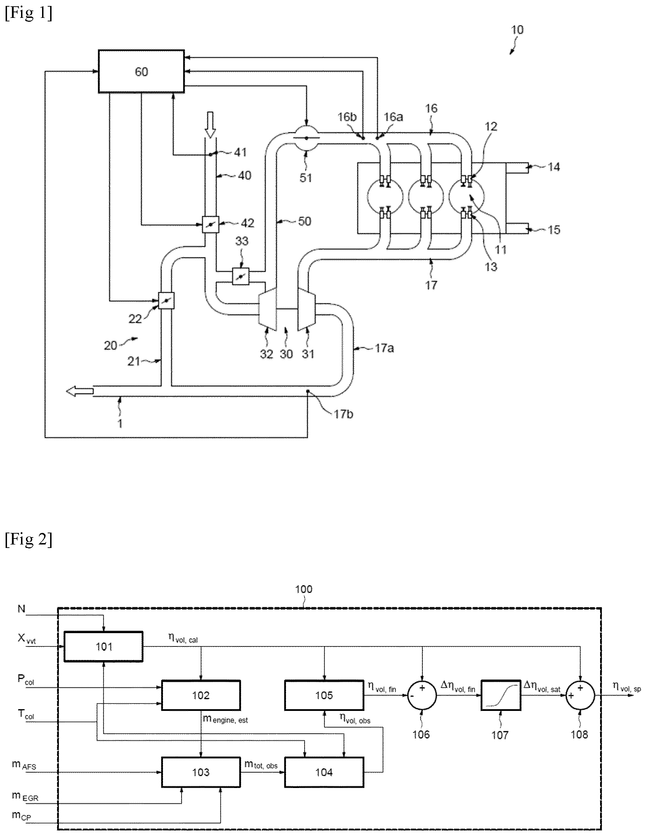

La figure 1 illustre un moteur à combustion interne 10 du type à allumage commandé (fonctionnant notamment à l'essence) muni d'un circuit de recirculation partielle des gaz d'échappement dit circuit EGR (acronyme anglophone « exhaust gaz recirculation ») 20, d'un turbocompresseur de suralimentation 30 et d'une distribution variable VVT (acronyme anglophone pour « variable valve timing », ) respectivement à l'admission et à l'échappement 14,15 permettant de modifier le phasage de l'ouverture des soupapes dans le cycle de combustion du moteur.

Sur l'exemple illustré par la figure 1, le moteur est du type suralimenté. Cependant, dans une variante non représentée, il peut s'agir d'un moteur du type à aspiration naturelle (moteur atmosphérique).

Plus précisément, le moteur 10 comprend au moins un cylindre 11 muni de soupapes d'admission 12 et de soupapes d'échappement 13 dont l'instant de levée est commandé respectivement par une distribution variable à l'admission 14 et par une distribution variable à l'échappement 15.

Les soupapes d'admission 12 sont reliées à un collecteur d'admission 16 muni d'une sonde de pression 16a et d'une sonde de température 16b.

Les soupapes d'échappement 13 sont reliées à un collecteur d'échappement 17 relié à la turbine 31 du turbocompresseur 30. La sortie de la turbine 31 est connectée à une conduite d'échappement 17a munie d'une sonde à oxygène 17b permettent de déterminer la richesse des gaz à l'échappement. La conduite d'échappement 17a est généralement munie d'un ou plusieurs moyens de traitement (non représentés sur la figure) des espèces polluantes contenues dans les gaz de combustion émis par le moteur, par exemple un catalyseur trois voies, un piège à oxydes d'azotes, etc. Une conduite 21 d'un circuit EGR 20 est piquée en amont de la mise à l'air libre de l'échappement, par exemple en aval des moyens de traitement. Le circuit EGR 20 comprend une vanne de débit EGR 22 permettant de commander le débit EGR et peut être muni d'un filtre et ou d'un échangeur thermique.

Le moteur 10 est muni d'une conduite d'admission d'air frais 40 comprenant une mise à l'air libre à l'une de ses extrémités, par laquelle de l'air frais est prélevé dans l'atmosphère extérieure puis acheminé vers le moteur, en général au travers d'un filtre à air (non représenté). Cette conduite 40 est connectée par son autre extrémité au compresseur 32 du turbocompresseur 30. La conduite d'admission d'air frais 40 est également muni d'un débitmètre 41 et d'une vanne d'admission d'air frais 42.

L'autre extrémité de la conduite 21 du circuit EGR est piquée sur la conduite d'admission d'air frais 40 entre la vanne d'admission d'air frais 42 et le compresseur 32 du turbocompresseur.

Dans la mesure où les gaz d'échappement EGR sont prélevés en un point du circuit d'échappement du moteur qui est situé en aval de la turbine, alors qu'ils sont déjà détendus par la turbine, et qu'ils sont réintroduits en un point du circuit d'admission du moteur qui est situé en amont de la turbine, c'est-à-dire avant d'être compressés par le compresseur, le circuit EGR est qualifié de circuit EGR à basse pression (« EGR BP »).

En variante non représentée, dans le cas où le moteur est du type à aspiration naturelle, il est dépourvu de turbocompresseur. Le circuit EGR prend alors généralement naissance en aval des moyens de traitement de la conduite d'échappement 17a, et son autre extrémité débouche en amont du moteur.

La sortie du compresseur 32 est connectée à une conduite d'admission 50 débouchant sur une vanne d'admission 51, connectée elle-même au collecteur d'admission 16. Un circuit de décharge muni d'une vanne à décharge 33 est disposé en parallèle du compresseur 32.

Bien que non illustré, les cylindres 11 sont munis d'injecteurs de carburant reliés par au moins une pompe à un réservoir de carburant.

Une unité de commande électronique 60 est reliée en entrée aux différents capteurs et sondes et en sortie aux différentes vannes et moyens de commande de sorte à pouvoir commander le moteur à combustion interne en fonction d'au moins un procédé de commande.

Alternativement, l'unité de commande électronique 60 comprend un système de commande selon l'invention.

La commande selon l'invention consiste à estimer le rendement de remplissage et à commander son augmentation progressive jusqu'à la valeur de consigne déterminée en fonction de la requête de couple du conducteur, c'est-à-dire l'enfoncement de la pédale d'accélérateur. La commande est itérative.

On initialise le modèle de remplissage au premier pas de calcul, avec une valeur de rendement de remplissage prédéterminée. Dans un mode de réalisation, la valeur de rendement de remplissage prédéterminée est égale à une valeur calibrée du rendement de remplissage $\eta_{vol,cal}$, déterminée préalablement sur banc d'essais et mémorisée dans une cartographie. Dans un autre mode de réalisation, la valeur de rendement de remplissage prédéterminée est égale à la dernière valeur de rendement de remplissage mémorisée.

Au pas suivant n+1, on réalise une estimation du débit total $Q_{tot,obs}$ en fonction du débit massique d'air frais mesuré, du débit moteur total estimé par le modèle de remplissage, du débit de gaz recyclés estimé par l'équation de Barré Saint Venant, d'un débit de purge canister du moteur, et des paramètres prédéterminés par l'équation suivante :

$$Q_{tot,obs} = b * Q_{engine,est} + (1-b)(Q_{AFS}) + Q_{egr,est} + Q_{CP} \qquad (\text{Eq. 4})$$

Avec :

    b : un coefficient compris entre 0 et 1

    $Q_{CP}$ : le débit de purge canister

    $Q_{AFS}$ : Le débit massique d'air frais mesuré par le débitmètre,

    $Q_{engine,est}$ : le débit moteur total estimé par le modèle de remplissage avec la valeur de remplissage du pas courant n

    $Q_{egr,est}$ : le débit de gaz recyclés estimé par l'équation de Barré Saint Venant

Le débit de purge canister $Q_{CP}$ correspond au débit massique de gaz issu du réservoir de carburant, périodiquement purgé dans les gaz admis dans le moteur.

La paramètre « b » permet de prendre en compte la précision relative de l'estimation $Q_{engine,est}$ et $Q_{AFS}$. Ce paramètre « b » est déterminé en se basant sur des paramètres propres à l'estimation du débit d'air total, notamment :

- l'instant de fermeture de la vanne admission dans le cycle de combustion, et donc, sur l'estimation du débit à partir de la pression dans le collecteur $P_{col}$. Ce paramètre est représenté par la position de levée de soupape $X_{VVT}$ de la distribution variable à l'admission
- la précision du débitmètre d'air, elle-même dépendant du débit d'air frais lui-même
- La pression dans le collecteur $P_{col}$

Connaissant les valeurs de pression $P_{col}$ et de température $T_{col}$ dans le collecteur d'admission, qui sont supposées parfaitement exactes, on calcule la valeur de rendement de remplissage $\eta_{vol,obs}$ au pas suivant n+1 qui correspond à la valeur estimée de débit $Q_{tot,obs}$ au pas suivant n+1, par application de l'équation suivante :

$$\eta_{vol,obs} = Q_{tot,obs} * \frac{120.r.T_{col}}{N.V_{cyl}.P_{col}} \qquad (Eq. 5)$$

Le rendement de remplissage au pas suivant n+1 est alors substitué à la précédente valeur déterminée du pas courant n.

On définit ensuite une valeur finale de rendement de remplissage $\eta_{vol,fin}$ tenant compte de la valeur observée $\eta_{vol,obs}$ et de la valeur cartographiée $\eta_{vol,cal}$ du rendement de remplissage.

$$\eta_{vol,fin} = (\alpha . \eta_{vol,obs} + (1 - \alpha) \eta_{vol,cal}) \qquad (Eq. 6)$$

Le paramètre $\alpha$ est fonction du temps de convergence du rendement de remplissage.

Plus $\alpha$ est proche de 1, plus on fait confiance à la valeur du rendement de remplissage observée $\eta_{vol,obs}$, et plus $\alpha$ est proche de 0, plus on fait confiance au rendement de remplissage calibré $\eta_{vol,cal}$, c'est-à-dire à la valeur d'initialisation.

Lors d'un changement de rendement de remplissage, on observe en général un régime transitoire. Quelle que soit la valeur ou l'évolution de la valeur du paramètre $\alpha$, il devient égal à 1 à l'issue du régime transitoire, c'est-à-dire lorsqu'un régime stabilisé est obtenu. En d'autres termes, on ne tient plus compte alors que du rendement observé.

Dans un mode de réalisation, la valeur du paramètre $\alpha$ évolue d'une valeur 0 au début du régime transitoire à la valeur 1 à l'issue de ce régime.

Dans un mode de réalisation alternatif, la valeur du paramètre $\alpha$ est égale à 1. Dans ce cas, on ne tient pas compte de la valeur calibrée du rendement de remplissage $\eta_{vol,cal}$.

Le rendement de remplissage final $\eta_{vol,fin}$ ainsi calculé sert à modifier la consigne de pression dans le collecteur $P_{col,sp}$, en corrigeant le remplissage estimé.

En effet, la consigne de débit total moteur $Q_{tot,sp}$ ne change pas et correspond à la somme de la consigne de débit d'air $Q_{air,sp}$ et de la consigne de débit de gaz EGR $Q_{egr,sp}$ qu'on veut obtenir physiquement dans le moteur.

La consigne de débit total moteur $Q_{col,sp}$ est liée à la pression de collecteur $P_{col}$ et au rendement de remplissage $\eta_{vol}$ par l'équation du modèle de remplissage (Eq. 5). On comprend alors qu'une modification du rendement de remplissage $\eta_{vol}$ implique une modification de la pression dans le collecteur $P_{col}$. On peut alors modifier la consigne de pression dans le collecteur $P_{col,sp}$ pour commander le moteur et la réguler en boucle fermée en fonction de l'écart entre la mesure de pression dans le collecteur $P_{col}$ et la consigne de pression dans le collecteur $P_{col,sp}$.

La consigne de pression dans le collecteur $P_{col,sp}$ est calculée de préférence de la façon suivante :

$$P_{col,sp} = m_{engine,sp} * \frac{120.r.T_{col}}{\eta_{vol,fin}.N.V_{cyl}} \qquad (Eq. 7)$$

soit

$$P_{col,sp} = m_{engine,sp} * \frac{120.r.T_{col}}{(\alpha . \eta_{vol,obs} + (1 - \alpha) \eta_{vol,cal}).N.V_{cyl}} \qquad (Eq. 8)$$

Avec : $\alpha$, un paramètre compris entre 0 et 1.

$\eta_{vol,cal}$ : rendement de remplissage calibré
$m_{engine,sp}$ : consigne de masse dans le moteur

Sur la figure 2, les principaux éléments d'un système de commande selon l'invention sont illustrés.

Un moyen de calcul 101 détermine le rendement de remplissage calibré $\eta_{vol,cal}$ en fonction de la vitesse de rotation N du moteur, de la mesure de pression dans le collecteur d'admission $P_{col}$ et, lorsque cela est applicable, des données de levée des soupapes de la distribution variable VVT reçus en entrée et en fonction d'une cartographie mémorisée.

Un moyen de calcul 102 détermine une estimation de la masse admise dans le moteur $m_{engine,est}$ en fonction de la pression dans le collecteur d'admission $P_{col}$, de la température dans le collecteur d'admission $T_{col}$, du volume des cylindres $V_{cyl}$ et de la valeur calibrée du rendement de remplissage $\eta_{vol,cal}$ reçus en entrée en appliquant l'équation suivante :

$$m_{engine,est} = \eta_{vol,cal} \cdot \frac{P_{col}}{r \cdot T_{col}} \cdot V_{cyl} \qquad\qquad (Eq. 9)$$

On rappelle ici que dans un moteur à quatre temps, il existe une correspondance entre masses admises (m) et débits, plus précisément débits massiques (Q ou $\dot{m}$).

$$m = \frac{120}{N} Q \qquad\qquad (Eq. 10)$$

Un moyen de calcul 103 détermine la valeur observée de la masse totale admise dans les cylindres $m_{tot,obs}$ en fonction de la masse admise dans le moteur $m_{engine,est}$ et de la quantité d'air admis mesurée $m_{AFS}$, de la quantité de gaz d'échappement partiellement recirculés $m_{EGR}$ et de la masse de purge canister $m_{CP}$ par application d'un observeur tel que décrit à l'équation Eq. 4.

Un moyen de calcul 104 détermine la valeur observée du rendement de remplissage $\eta_{vol,obs}$ en fonction de la valeur observée de la masse totale admise dans les cylindres $m_{tot,obs}$, de la température dans le collecteur $T_{col}$, de la pression dans le collecteur $P_{col}$ et du volume des cylindres $V_{cyl}$ par application de l'équation Eq. 5.

Un moyen de calcul 105 détermine la valeur finale du rendement de remplissage $\eta_{vol,fin}$ en fonction de la valeur observée du rendement de remplissage $\eta_{vol,obs}$ et de la valeur calibrée du rendement de remplissage $\eta_{vol,cal}$ par application de l'équation Eq. 6.

Un soustracteur 106 détermine ensuite l'écart de rendement de remplissage $\Delta\eta_{vol}$ entre la valeur finale $\eta_{vol,fin}$ et la valeur calibrée $\eta_{vol,cal}$ du rendement de remplissage.

Un moyen de calcul 107 réalise la saturation de l'écart de rendement de remplissage $\Delta\eta_{vol}$ de sorte que la valeur absolue de l'écart de rendement de remplissage $\Delta\eta_{vol}$ soit inférieure à 5% de la valeur calibrée du rendement de remplissage $\eta_{vol,cal}$.

Un additionneur 108 détermine une consigne de rendement de remplissage $\eta_{vol,sp}$ en additionnant la valeur saturée $\Delta\eta_{vol,sat}$ de l'écart de rendement de remplissage et la valeur calibrée du rendement de remplissage $\eta_{vol,cal}$.

Connaissant la consigne de rendement de remplissage $\eta_{vol,sp}$, le moyen de commande électronique du moteur à combustion interne détermine alors la consigne de pression dans le collecteur d'admission $P_{col,sp}$ par application de l'équation Eq. 8.

En résumé, l'invention propose l'utilisation d'un rendement de remplissage observé pour calculer la consigne de pression dans le collecteur $P_{col,sp}$, sur la base d'un débit moteur observé utilisant l'ensemble des données disponibles à savoir : le débit d'EGR via l'équation de Barré Saint venant, la mesure du débitmètre, et le modèle de remplissage via la pression dans le collecteur $P_{col}$.

Le système de commande peut également être réalisé par des moyens de commande tels que ceux compris dans l'unité commande électronique sous la forme d'étapes de procédé.

## Revendications

1.  Système de commande d'un moteur à combustion interne à allumage commandé muni d'un circuit de recirculation partielle des gaz d'échappement (20) muni d'une vanne de débit EGR (22), de capteurs de pression (16a) et de température (16b) dans le collecteur d'admission, d'un débitmètre (41) dans la conduite d'admission d'air frais (40), et d'une vanne d'admission (51) à l'entrée du collecteur d'admission, **caractérisé par le fait qu'**il comprend :

    un moyen de calcul 102 d'une estimation de la masse admise dans le moteur en fonction du volume des cylindres, de la pression et de la température dans le collecteur d'admission et d'une valeur calibrée du rendement de remplissage issue d'une cartographie,
    un troisième moyen de calcul 103 de la valeur observée de la masse totale admise dans les cylindres en fonction de la masse admise dans le moteur, de la quantité d'air admis mesurée, de la quantité de gaz d'échappement partiellement recirculés et de la masse de purge canister par application d'un observeur un moyen de calcul 104 de la valeur observée du rendement de remplissage en fonction de la valeur observée de la masse totale admise dans les cylindres, du volume des cylindres, de la température et de la pression dans le collecteur d'admission,
    des moyens de calcul d'une consigne de pression dans le collecteur d'admission en fonction de la valeur observée et de la valeur calibrée du rendement de remplissage, et
    des moyens de commande du moteur en boucle fermée en fonction de la consigne de pression dans le collecteur d'admission et de la mesure de la pression dans le collecteur d'admission.

**2.** Système de commande d'un moteur à combustion interne selon la revendication 1, comprenant un moyen de calcul 101 d'une valeur calibrée du rendement de remplissage en fonction de la vitesse de rotation du moteur, de la mesure de pression dans le collecteur d'admission et d'une cartographie mémorisée.

**3.** Système de commande d'un moteur à combustion interne selon la revendication 1, dans lequel le moteur à combustion interne est muni d'une distribution variable à l'admission (14), un moyen de calcul 101 étant alors configuré pour déterminer le rendement de remplissage en fonction de la vitesse de rotation du moteur, de la mesure de pression dans le collecteur d'admission, des données de levée des soupapes de la distribution variable et d'une cartographie mémorisée.

**4.** Système de commande d'un moteur à combustion interne selon l'une quelconque des revendications 1 à 3, comprenant un moyen de calcul 105 de la valeur finale du rendement de remplissage comme la moyenne pondérée entre le rendement de remplissage observé et une valeur calibrée du rendement de remplissage, la pondération évoluant avec le temps au cours d'un régime transitoire jusqu'à une valeur finale du rendement de remplissage égale au rendement de remplissage observé.

**5.** Système de commande d'un moteur à combustion interne selon l'une quelconque des revendications 1 à 3, comprenant un moyen de calcul 105 de la valeur finale du rendement de remplissage comme étant égale au rendement de remplissage observé.

**6.** Système de commande d'un moteur à combustion interne selon l'une quelconque des revendications 1 à 5, dans lequel le troisième moyen de calcul 103 détermine la valeur observée de la masse totale admise comme une moyenne pondérée de la fonction de la masse admise, et de la quantité d'air admis mesurée, sommée à la quantité de gaz d'échappement partiellement recirculés et de la masse de purge canister.

**Patentansprüche**

**1.** Steuersystem für einen Verbrennungsmotor mit Fremdzündung, der mit einem teilweisen Abgasrückführungskreis (20) versehen ist, der mit einem AGR-Durchflussventil (22), Druck- (16a) und Temperatursensoren (16b) in dem Einlasskrümmer, einem Durchflussmesser (41) in der Frischluftansaugleitung (40) und einem Einlassventil (51) an dem Eingang des Einlasskrümmers versehen ist, **dadurch gekennzeichnet, dass** es umfasst:

ein Mittel 102 zum Berechnen einer Schätzung der in den Motor eingelassenen Masse abhängig von dem Volumen der Zylinder, des Drucks und der Temperatur in dem Einlasskrümmer und eines kalibrierten Werts der Fülleffizienz, der sich aus einem Kennfeld ergibt,
ein drittes Mittel 103 zum Berechnen des beobachteten Werts der in die Zylinder eingelassenen Gesamtmasse abhängig von der in den Motor eingelassenen Masse, der gemessenen eingelassenen Luftmenge, der teilweise rückgeführten Abgasmenge und der Tankentlüftungsmasse durch Anwendung eines Beobachters
ein Mittel 104 zum Berechnen des beobachteten Werts der Fülleffizienz abhängig von dem beobachteten Wert der in die Zylinder eingelassenen Gesamtmasse, des Volumens der Zylinder, der Temperatur und des Drucks in dem Einlasskrümmer,
Mittel zum Berechnen eines Drucksollwerts in dem Einlasskrümmer abhängig von dem beobachteten Wert und dem kalibrierten Wert der Fülleffizienz, und
Mittel zum Steuern des Motors in geschlossener Schleife abhängig von dem Drucksollwert in dem Einlasskrümmer und der Messung des Drucks in dem Einlasskrümmer.

**2.** System zum Steuern eines Verbrennungsmotors nach Anspruch 1, umfassend ein Mittel 101 zum Berechnen eines kalibrierten Werts der Fülleffizienz abhängig von der Motordrehzahl, der Druckmessung in dem Einlasskrümmer und eines gespeicherten Kennfelds.

**3.** System zum Steuern eines Verbrennungsmotors nach Anspruch 1, wobei der Verbrennungsmotor mit einer variablen Verteilung an dem Einlass (14) versehen ist, wobei ein Berechnungsmittel 101 dann konfiguriert ist, um die Fülleffizienz abhängig von der Motordrehzahl, der Druckmessung in dem Einlasskrümmer, Ventilhubdaten der variablen Abgabe und eines gespeicherten Kennfelds zu bestimmen.

**4.** System zum Steuern eines Verbrennungsmotors nach einem der Ansprüche 1 bis 3, umfassend ein Mittel 105 zum Berechnen des Endwerts der Füllungseffizienz als das gewogene Mittel zwischen der beobachteten Füllungseffizienz und einem kalibrierten Wert der Füllungseffizienz, wobei die Gewichtung sich im Laufe der Zeit während eines vorübergehenden Zustands entwickelt, bis ein Endwert der Fülleffizienz erreicht wird, der gleich der beobachteten Fülleffizienz ist.

**5.** System zum Steuern eines Verbrennungsmotors nach einem der Ansprüche 1 bis 3, umfassend ein Mittel 105 zum Berechnen des Endwerts der Füllungseffizienz als gleich der beobachteten Füllungseffizienz.

**6.** System zum Steuern eines Verbrennungsmotors nach einem der Ansprüche 1 bis 5, wobei das dritte Berechnungsmittel 103 den beobachteten Wert der eingelassenen Gesamtmasse als ein gewogenes Mittel der Funktion der eingelassenen Masse und der gemessenen Menge eingelassener Luft, summiert mit der Menge des teilweise rückgeführten Abgases und der Tankentlüftungsmasse bestimmt.

**Claims**

**1.** System for controlling a spark-ignition internal combustion engine, which is provided with a circuit (20) for partly recirculating exhaust gases provided with an EGR flow valve (22), pressure (16a) and temperature (16b) sensors in the intake manifold, a flow meter (41) in the fresh air intake line (40), and an intake valve (51) at the inlet of the intake manifold, **characterized in that** the system comprises:

a means 102 for calculating an estimate of the mass which is taken into the engine depending on the cylinder volume, the pressure and the temperature in the intake manifold and a calibrated value of the filling efficiency derived from mapping,
a third means 103 for calculating the observed value of the total mass which is taken into the cylinders as a function of the mass taken into the engine, the measured quantity of intake air, the quantity of partly recirculated exhaust gases and the canister purge mass by applying an observer
a means 104 for calculating the observed value of the filling efficiency as a function of the observed value of the total mass taken into the cylinders, the cylinder volume, the temperature and the pressure in the intake manifold,
means for calculating a pressure setpoint in the intake manifold as a function of the observed value and the calibrated value of the filling efficiency, and
means for controlling the engine in a closed loop as a function of the pressure setpoint in the intake manifold and the measurement of the pressure in the intake manifold.

**2.** System for controlling an internal combustion engine according to claim 1, comprising a means 101 for calculating a calibrated value of the filling efficiency as a function of the speed of the engine, the measurement of the pressure in the intake manifold and stored mapping.

**3.** System for controlling an internal combustion engine according to claim 1, wherein the internal combustion engine is provided with variable distribution at the intake (14), a calculation means 101 being configured to determine the filling efficiency as a function of the speed of the engine, the measurement of the pressure in the intake manifold, data lifted from variable distribution valves and stored mapping.

**4.** System for controlling an internal combustion engine according to any of claims 1 to 3, comprising a means 105 for calculating the final value of the filling efficiency as the weighted average between the observed filling efficiency and a calibrated value of the filling efficiency, the weighting evolving with time during a transient regime up to a final value of the filling efficiency that is equal to the observed filling efficiency.

**5.** System for controlling an internal combustion engine according to any of claims 1 to 3, comprising a means 105 for calculating the final value of the filling efficiency as being equal to the observed filling efficiency.

**6.** System for controlling an internal combustion engine according to any of claims 1 to 5, wherein the third calculation means 103 determines the observed value of the total intake mass as a weighted average of the function of the intake mass, and the measured quantity of intake air, summed with the quantity of partly recirculated exhaust gas and the canister purge mass.

[Fig 1]

[Fig 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014067287 A1